# EUROPÄISCHE PATENTANMELDUNG

(11) **EP 1 623 767 A1**
(43) Veröffentlichungstag der Anmeldung: **08.02.2006**
(21) Anmeldenummer: 05016812.9
(22) Anmeldetag: 02.08.2005
(51) Int. Cl.: B04C 5/103, B03B 5/34, B01D 21/26

(54) **Trennapparat für Suspensionen**

(30) Priorität: 05.08.2004 DE 102004038125
(71) Anmelder: LINDE-KCA-Dresden GmbH, 01277 Dresden (DE)
(72) Erfinder: Pankow, Steffen, Dr., 01219 Dresden (DE)

(57) **Zusammenfassung**

Es wird ein Trennapparat für Suspensionen beschrieben. In einem Grundkörper 1 ist ein Innenkörper 2 angeordnet, wobei der Grundkörper 1 einen konischen Boden und der Innenkörper 2 einen unten offenen Konus aufweisen. In den Innenkörper 2 mündet ein exzentrisch angeordneter Zulauf 3 für die Suspension. Am Kopf des Trennapparats ist ein Ablauf 5 für schwer sedimentierbare Feststoffe enthaltende Flüssigkeit und im Bereich des konischen Bodens des Grundkörpers 1 ein Abzug 4 für leicht sedimentierbare Feststoffe enthaltenden Schlamm vorgesehen.

## Beschreibung

Die Erfindung betrifft einen Trennapparat für Suspensionen.

Bei verfahrenstechnischen Prozessen stellt sich häufig das Problem, dass leicht sedimentierbare und schwer sedimentierbare Feststoffe einer Suspension voneinander getrennt werden müssen. Insbesondere beim Betrieb von Bioreaktoren zur biologischen Behandlung von Suspensionen, z.B. Schlämmen, Maischen, Brüden, etc. ergeben sich häufig anlagentechnische Probleme infolge von Sedimentablagerungen im Bioreaktor. Beispielsweise werden Faulbehälter, Gärreaktoren usw. wegen günstigerer Investitionskosten üblicherweise mit flachem oder nur leicht kegelförmigen Boden gebaut. Solche Bioreaktoren weisen Umwälzsysteme auf, um den Abbauprozess zu optimieren und das Absetzen von sedimentierbaren Stoffen zu unterdrücken. Diese Umwälzsysteme können auf unterschiedlichste Art ausgebildet sein. Als Beispiel sei hier der in der WO 98/58070 beschriebene Bioreaktor genannt, bei dem der Reaktorinhalt über ein zentrales Leitrohr mit Gaseinpressung umgewälzt wird. Auch Systeme mit externen Rücklaufleitungen sind bekannt, bei denen die Suspension vom Reaktor abgezogen und an gewünschten Stellen wieder in den Reaktor zurückgeführt wird.

Sowohl durch Störungen im Prozess (Ausfall von Pumpen und Gebläsen, Reparatur und Wartungsarbeiten) als auch durch die Art der eingetragenen Stoffe selbst kommt es zur Bildung von Sedimenten, die - einmal sedimentiert - derzeit nicht oder nur ungenügend während des normalen Betriebes wieder aus dem Reaktor ausgetragen werden können. Dies ist vor allem dadurch begründet, dass die eingetragene Energie zwar ausreicht, das Mehrphasengemisch unter Normalbedingungen homogen zu halten, phasengetrennte Systeme jedoch nur zum Teil wieder homogenisiert werden können. Dies führt dazu, dass sich im Laufe der Betriebszeit nach und nach stärkere Sedimentablagerungen bilden. Im Betriebshandbuch wird daher üblicherweise gefordert, in entsprechenden Abständen den Reaktor zu öffnen und zu beräumen, was mit erheblichem Aufwand an Kosten und Personal verbunden ist und auch erhebliche Einschränkungen im Betrieb nach sich zieht (verringerte Annahmekapazität, Speicherung bzw. Entsorgung der Reaktorflüssigkeit etc.).

Rundsandfänge für ähnliche Aufgaben aus dem Bereich der kommunalen Abwasserbehandlung sind seit langem bekannt, wobei diese Systeme in der Regel offen und damit für einen drucklosen Gebrauch konzipiert sind.

Andererseits wurden und werden Hydrozyklone für diesen Anwendungsfall immer wieder diskutiert. Ihr Einsatz scheiterte jedoch in der Regel daran, dass kommerziell verfügbare Systeme eine sehr hohe Trennschärfe bei im Allgemeinem wesentlich geringeren Partikeldurchmessern aufweisen und als Hochleistungssysteme für den vorgenannten Einsatzfall als überzogen ausscheiden.

Da sich die Sedimentierbarkeit der Inhaltsstoffe von Gärreaktoren im Laufe des Abbauprozesses erheblich erhöht, bedarf es eines erheblichen Aufwandes, diese Stoffe durch Rühren oder Umpumpen am Absetzen zu hindem. Bei Schlaufenreaktoren, wie in der WO 98/58070 beschrieben, werden hierfür in der Regel Kreiselpumpen mit bis zu drei Düsen eingesetzt, wobei die Düsen gleichmäßig über den Umfang verteilt werden. Standardmäßig sind dabei Reaktorabzug und Umwälzleitung getrennt. Der Abzug für die Bodenumwälzung erfolgt an der Reaktorwand ca. 2 m über dem Boden (Minderung des Verschleißes der Umwälzpumpen), der eigentliche Reaktorabzug mit einem entsprechend kleiner dimensionierten Rohr von der Reaktormitte. Nachteil dieser Anordnung ist ein ungleichmäßiges Strömungsbild innerhalb des Reaktors in Abhängigkeit von der jeweils aktiven Düse und ihrer relativen Lage zum festen Entnahmepunkt. Darüber hinaus besteht die Gefahr der Sedimentablagerung, wenn bei aktiver Bodenumwälzung kein Faulgut entnommen wird (diskontinuierlicher Schlammabzug, Pausen z.B. am Wochenende).

Der Erfindung liegt die Aufgabe zugrunde, einen Trennapparat für Suspensionen zur Verfügung zu stellen, der im Vergleich zu Hydrozyklonen technisch einfacher aufgebaut ist und sich im Gegensatz zu Rundsandfängen auch für einen Einsatz unter Druck eignet.

Diese Aufgabe wird erfindungsgemäß dadurch gelöst, dass in einem Grundkörper ein Innenkörper angeordnet ist, wobei der Grundkörper einen konischen Boden und der Innenkörper einen unten offenen Konus aufweisen, in den Innenkörper ein exzentrisch angeordneter Zulauf für die Suspension mündet, am Kopf des Trennapparats ein Ablauf für schwer sedimentierbare Feststoffe enthaltende Flüssigkeit und im Bereich des konischen Bodens des Grundkörpers ein Abzug für sedimentierte Feststoffe und/oder Schlamm vorgesehen sind. Vorzugsweise sind der Grundkörper und der Innenkörper im Wesentlichen zylindrisch geformt.

### Dabei beruht die Erfindung auf folgenden Überlegungen:

Die insbesondere bei Bioreaktoren auftretenden Probleme bezüglich Sedimentablagerungen im Reaktor sind im Wesentlichen darauf zurückzuführen, dass biologische Abbauprozesse eine Verdünnung der Suspension bewirken. Da der Abtrenneffekt der Sedimente verfahrensbedingt also nicht unterdrückt werden kann, soll nun erreicht werden, den Abtrennprozess räumlich zu begrenzen und die Sedimente an geeigneter Stelle (quasi-) kontinuierlich aus dem Reaktor zu entfernen. Auf diese Weise soll der eigentliche Reaktor vor Sedimentansammlungen geschützt und der Energieaufwand für die Umwälzung verringert werden. Ziel ist es, das Austragssystem für o.g. Einsatzfall so zu optimieren, dass auch eine Entnahme von bereits sedimentierten Inhaltsstoffen aus dem Reaktor möglich wird. Dadurch können die Grundreinigungszyklen der Reaktoren stark verringert und Betriebskosten extrem gesenkt werden. Darüber hinaus werden die Umwälzsysteme gegen Verschleiß geschützt und ein Wiedereinbringen entsprechender Partikel in den Reaktor verhindert. Die technische Lösung soll somit verschiedene Vorzüge der Systeme Hydrozyklon und Rundsandfang vereinen und innerhalb eines geschlossenen Systems unter Druck bei z.B. 1 bis 5 bar einsetzbar sein.

Vorzugsweise mündet der Zulauf für die Suspension tangential in den Innenkörper, so dass eine Zirkulationsströmung im Innenkörper erzeugt wird. Dabei ist der Zulauf vorteilhafterweise gegen den Boden des Grundkörpers geneigt. Der konische Boden des Grundkörpers endet zweckmäßigerweise in einer Trichterspitze.

Bevorzugt ist der Zulauf für die Suspension an seiner Mündung düsenförmig eingezogen oder mit einer Düse versehen. Außerdem ist der Ablauf für die Flüssigkeit mit Vorteil konisch oder trompetenförmig auf den Durchmesser des Innenkörpers zulaufend ausgebildet. Um eine optimale Zugänglichkeit zu erreichen, kann der Ablauf als abnehmbarer Deckel ausgeführt sein.

Gemäß einer besonders bevorzugten Ausführungsform der Erfindung wird der Trennapparat zur Abscheidung von Sedimenten aus Bioreaktoren eingesetzt. Hierzu ist der Zulauf für die Suspension mit einem Bodenabzug eines Bioreaktors zur biologischen Behandlung von biologisch abbaubaren Substanzen enthaltenden Medien verbunden. Beim Betrieb einer solchen Anlage fließt die Suspension aus dem Bioreaktor über den Bodenabzug in der Regel mit leichtem, stetigen Gefälle zum Trennapparat. Hier erfolgt analog zu einem Hydrozyklon eine tangentiale Einleitung in den Innenkörper des Trennapparates, wobei die Einströmungsrichtung leicht gegen den Boden geneigt sein sollte. Innerhalb des Innenkörpers bildet sich eine spiralförmige, nach oben gerichtete Strömung aus. Sehr schwere Sedimentpartikel haben die Möglichkeit, direkt zur Trichterspitze abzusinken. Dieser Effekt tritt auch dann auf, wenn der Trennapparat nur mit sehr geringer Fließgeschwindigkeit durchströmt wird. Innerhalb der Spiralströmung bewegen sich schwerere Partikel aufgrund der Dichteunterschiede im Schwerefeld nach außen. Am oberen Rand des Innenkörpers treten somit zuerst schwere Teile in den äußeren Ringraum über. Die Querschnittserweiterung bewirkt eine Geschwindigkeitsreduzierung und ein Absinken der schwereren Teilchen im äußeren Ringraum. Im oberen Teil wird die Strömung durch einen konus- bzw. trompetenförmigen Einlauf auf den Durchmesser der abführenden Leitung eingeschnürt. Aus dem unteren Teil werden die abgeschiedenen Sedimente (quasi-) kontinuierlich entfernt, wobei die Abzugsleitung in jedem Fall außerhalb des Innenkörpers geführt werden sollte.

Der Ablauf für die schwer sedimentierbare Feststoffe enthaltende Flüssigkeit ist bevorzugt über eine Rückführleitung mit dem Bioreaktor verbunden. Auf diese Weise ist sichergestellt, dass einerseits der leicht sedimentierbare Feststoffe enthaltende Schlamm aus der Anlage ausgeschleust werden kann und andererseits eine Rückführung von schwer sedimentierbare Feststoffe enthaltende Flüssigkeit in den Bioreaktor gewährleistet ist.

Mit besonderem Vorteil wird der Trennapparat zur Sedimentabscheidung bei Gärreaktoren eingesetzt. In diesem Fall ist der Bioreaktor als Gärreaktor zur Müllvergärung ausgebildet.

In die Rückführleitung zum Bioreaktor ist üblicherweise eine Rezirkulationspumpe eingeschaltet, die bevorzugt als trocken aufgestellte Tauchmotorpumpe direkt am Ablauf des Trennapparates montiert ist.

Der Zulauf für die Suspension kann auch eine Düse mit nicht rundem Querschnitt aufweisen, um die Weglänge für schwere Partikel bis zur Innenkörperwand zu reduzieren. Außerdem kann der Innenkörper als Verschleißeinsatz ausgeführt sein.

Die Erfindung bietet eine ganze Reihe von Vorteilen:

Durch den Einsatz des Trennapparates bei Reaktoren mit flachem Bodenkonus können auch Medien mit leicht sedimentierbaren Stoffen auf wirtschaftliche Weise behandelt werden, ohne dass es zu häufigen Betriebsstörungen kommt. Dabei werden wesentliche Merkmale von Zyklonabscheidem genutzt, wobei auf jene Eigenschaften verzichtet wird, die den Einsatz im Faulschlammbereich erschweren. Hierzu gehören die Verringerung der Druckverluste und damit der Betriebskosten bei ständiger Umwälzung. Außerdem können Gasansammlungen im Abstrombereich verhindert werden. Es werden die Vorteile eines Zyklonabscheiders mit denen eines Rundsandfanges bzw. eines Schwebebettreaktors kombiniert, ohne dass deren Nachteile zum Tragen kommen. Insgesamt wird ein kompakter, komplett zugänglicher Trennapparat zur Verfügung gestellt, der auch innerhalb eines geschlossenen Systems unter einem Druck von z.B. 1 bis 5 bar einsetzbar ist. Bei Kombination des Trennapparats mit einem Bioreaktor zur Sedimentausschleusung kann der Trennapparat vollständig außerhalb des Bioreaktors angeordnet sein.

Im Folgenden soll die Erfindung anhand eines in den Figuren schematisch dargestellten Ausführungsbeispiels näher erläutert werden:

Es zeigen
- Figur 1: einen Trennapparat in der Frontansicht
- Figur 2: einen Trennapparat in der Seitenansicht

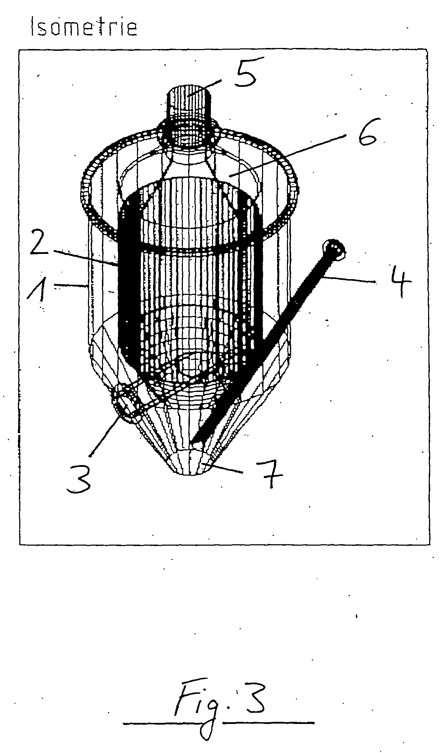

- Figur 3: einen Trennapparat in isometrischer Ansicht

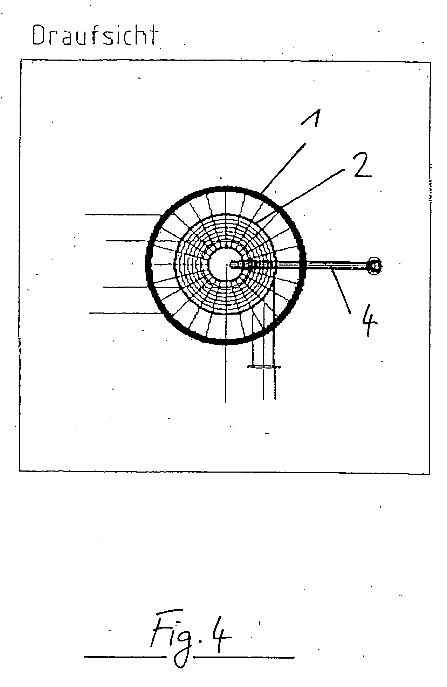

- Figur 4: einen Trennapparat in der Draufsicht

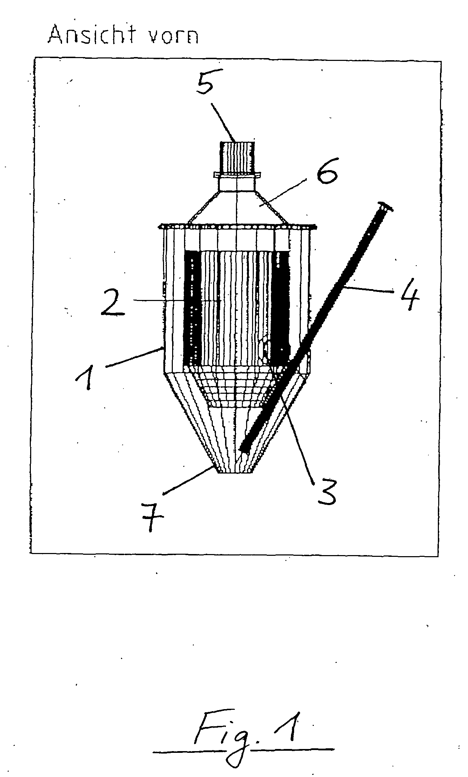

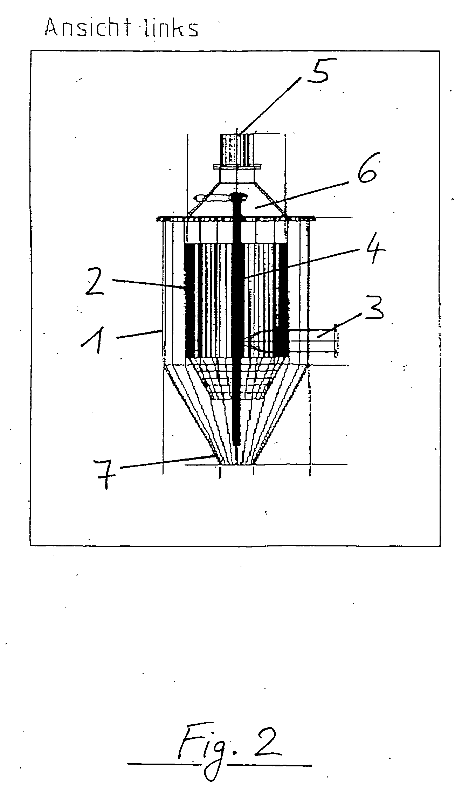

In den Figuren ist jeweils derselbe Trennapparat aus verschiedenen Ansicht dargestellt. In Figur 1 sind die einzelnen Teile des Trennapparates mit Bezugsziffem bezeichnet. Der Trennapparat weist einen äußeren Grundkörper 1 auf, in dem ein Innenkörper 2 angeordnet ist. Grundkörper 1 und Innenkörper 2 weisen eine im Wesentlichen zylindrische Form auf, wobei der Grundkörper 1 mit einem konischen Boden und einer Trichterspitze 7 versehen ist. Der Innenkörper 2 besitzt einen nach unten offenen Konus. Der Zulauf 3 für die Suspension ist exzentrisch angeordnet und - wie in Figur 2 dargestellt - entsprechend den zulässigen Druckverlusten als Düse eingezogen. Im oberen Deckel 6 ist der Ablauf 5 für schwer sedimentierbare Feststoffe enthaltende Flüssigkeit angeordnet. Der Deckel 6 ist konisch zulaufend an den Durchmesser des Innenkörpers 2 angepasst. Für eine optimale Zugänglichkeit ist der Deckel 6 komplett abnehmbar. Im Bereich des konischen Bodens des Grundkörpers 1 ist ein Abzug 4 für leicht sedimentierbare Feststoffe enthaltenden Schlamm vorgesehen.

## Patentansprüche

1. Trennapparat für Suspensionen, **dadurch gekennzeichnet, dass** in einem Grundkörper (1) ein Innenkörper (2) angeordnet ist, wobei der Grundkörper (1) einen konischen Boden und der Innenkörper (2) einen unten offenen Konus aufweisen, in den Innenkörper (2) ein exzentrisch angeordneter Zulauf (3) für die Suspension mündet, am Kopf des Trennapparats ein Ablauf (5) für schwer sedimentierbare Feststoffe enthaltende Flüssigkeit und im Bereich des konischen Bodens des Grundkörpers (1) ein Abzug (4) für sedimentierte Feststoffe und/oder Schlamm vorgesehen sind.

2. Trennapparat nach Anspruch 1, **dadurch gekennzeichnet, dass** der Grundkörper (1) und der Innenkörper (2) im Wesentlichen zylindrisch geformt sind.

3. Trennapparat nach Anspruch 1 oder 2, **dadurch gekennzeichnet, dass** der Zulauf (3) für die Suspension tangential in den Innenkörper (2) mündet.

4. Trennapparat nach einem der Ansprüche 1 bis 3, **dadurch gekennzeichnet, dass** der Zulauf (3) für die Suspension gegen den Boden des Grundkörpers (1) geneigt ist.

5. Trennapparat nach einem der Ansprüche 1 bis 4, **dadurch gekennzeichnet, dass** der konische Boden des Grundkörpers (1) in einer Trichterspitze (7) endet.

6. Trennapparat nach einem der Ansprüche 1 bis 5, **dadurch gekennzeichnet, dass** der Zulauf (3) an seiner Mündung düsenförmig eingezogen ist, oder mit einer Düse versehen ist.

7. Trennapparat nach einem der Ansprüche 1 bis 6, **dadurch gekennzeichnet, dass** der Ablauf (5) für die Flüssigkeit konisch oder trompetenförmig (6) auf den Durchmesser des Innenkörpers (2) zulaufend ausgebildet ist.

8. Trennapparat nach einem der Ansprüche 1 bis 7, **dadurch gekennzeichnet, dass** der Ablauf (5) für die Flüssigkeit als abnehmbarer Deckel (6) ausgebildet ist.

9. Trennapparat nach einem der Ansprüche 1 bis 8, **dadurch gekennzeichnet, dass** der Zulauf (3) für die Suspension mit einem Bodenabzug eines Bioreaktors zur biologischen Behandlung von biologisch abbaubare Substanzen enthaltenden Medien verbunden ist.

10. Trennapparat nach Anspruch 9, **dadurch gekennzeichnet, dass** der Ablauf (5) für schwer sedimentierbare Feststoffe enthaltende Flüssigkeit über eine Rückführleitung mit dem Bioreaktor verbunden ist.

11. Trennapparat nach Anspruch 9 oder 10, **dadurch gekennzeichnet, dass** der Bioreaktor als Gärreaktor zur Müllvergärung ausgebildet ist.
